# EUROPEAN PATENT SPECIFICATION

(11) **EP 3 720 821 B1**
(45) Date of publication and mention of the grant of the patent: **06.05.2026**
(21) Application number: 18786206.5
(22) Date of filing: 01.10.2018
(51) Int. Cl.: C02F 3/30, C02F 3/22, C02F 3/12

(54) **METHOD AND DEVICE FOR BIOLOGICAL WASTE WATER PURIFICATION**
VERFAHREN UND VORRICHTUNG ZUR BIOLOGISCHEN ABWASSERREINIGUNG
PROCÉDÉ ET DISPOSITIF DE PURIFICATION BIOLOGIQUE D'EAUX USÉES

(30) Priority: 06.12.2017 AT 510112017
(43) Date of publication of application: 14.10.2020
(73) Proprietor: NEWport GmbH, 6020 Innsbruck (AT)
(72) Inventor: INGERLE, Kurt, 6091 Götzens (AT)
(74) Representative: Patentanwaltskanzlei Matschnig & Forsthuber OG
(86) International application number: PCT/AT2018/060227
(87) International publication number: WO 2019/109116

(56) References cited:
- WO-A1-2014/065859
- WO-A1-2016/154646
- WO-A1-2016/172749
- CN-U- 202 369 444
- US-A- 5 902 484

## Description

The present invention relates to a method for carrying out biological purification of wastewater with the aid of activated sludge in a sewage treatment plant, which method allows for an emergency operation of the sewage treatment plant, the sewage treatment plant comprising:
- an activated sludge tank that can be ventilated (hereinafter referred to as the B tank),
- at least two sedimentation and recirculation tanks (hereinafter referred to as SU tanks), wherein the at least two SU tanks include at least one first sedimentation and recirculation tank (hereinafter referred to as SU₁ tank) and at least one second sedimentation and recirculation tank (hereinafter referred to as SU₂ tank), wherein the at least one SU₁ tank and the at least one SU₂ tank are continuously connected hydraulically to the B tank, wherein in the at least one SU₁ tank and in the at least SU₂ tank a number of operating cycles are carried out over the course of a day, including a sludge return phase, a recirculation phase, a pre-sedimentation phase and a draw-off phase (hereinafter referred to as the S phase, U phase, V phase, and A phase, respectively), and
- a tank for biological phosphor elimination (hereinafter referred to as P tank), wherein the P tank is hydraulically connected with the B tank via one or more openings, and wherein the volume of the P tank is mixed permanently or intermittently,

wherein in said method the wastewater is first introduced into the P tank and subsequently into the B tank, and then from the B tank, in alternation, into the at least one SU₁ tank and into the at least one the SU₂ tank,
wherein consecutively, in the S phase at least part of the thickened activated sludge is introduced from the at least one SU₁ tank and the at least one SU₂ tank, respectively, into the P tank, in the U phase the activated sludge is again mixed with the water, in the V phase the activated sludge is sedimented, and in the A phase treated water is drawn off, wherein in the at least one SU₁ tank and the at least one SU₂ tank said operating cycles are phase-shifted in relation to one another, the A phases in the at least one SU₁ tank and the at least one SU₂ tank border one another, a flow passes through the at least one SU₁ tank and the at least one SU₂ tank, respectively, merely in the A phases, an approximately constant water level is provided and therefore a wastewater treatment system discharge corresponding to the wastewater treatment system supply develops ("continuous flow" principle).

The present inventions also relates to a sewage treatment plant for carrying out biological purification of wastewater with the aid of activated sludge, which sewage treatment plant is suitable for carrying out the method of the present invention, wherein the sewage treatment plant comprises:
- an activated sludge tank that can be ventilated (hereinafter referred to as the B tank),
- at least two sedimentation and recirculation tanks (hereinafter referred to as SU tanks), wherein the at least two SU tanks include at least one first sedimentation and recirculation tank (hereinafter referred to as SU₁ tank) and at least one second sedimentation and recirculation tank (hereinafter referred to as SU₂ tank), wherein the at least one SU₁ tank and the at least one SU₂ tank are continuously connected hydraulically to the B tank, wherein in the at least one SU₁ tank and in the at least SU₂ tank a number of operating cycles are carried out over the course of a day, including a sludge return phase, a recirculation phase, a pre-sedimentation phase and a draw-off phase (hereinafter referred to as the S phase, U phase, V phase, and A phase, respectively), and
- a tank for biological phosphor elimination (hereinafter referred to as P tank), wherein the P tank is hydraulically connected with the B tank via one or more openings, and wherein the volume of the P tank is mixed permanently or intermittently.

Methods and sewage treatment plants for carrying out biological purification of wastewater with the aid of activated sludge were previously described in WO 01/46075 A2. The methods and treatment plants described in WO 01/46075 A2 are known under the registered trademark BIOCOS, wherein more than 150 plants have been implemented so far. Methods and sewage treatment plants for carrying out biological purification of wastewater with the aid of activated sludge which, in addition, comprise a P tank for biological phosphor elimination are known from WO 2016/154646 A1.

WO 2016/154646 A1 discloses a method for biological wastewater purification with phosphorous removal by means of a sewage treatment plant comprising an activated sludge tank, sedimentation and recirculation tanks and a tank for biological phosphorous removal. US 5 902 484 A describes a biological process and a system for treating wastewater based on a sequencing batch reactor (SBR) process with constant water level. CN 202 369 444 U discloses a multi-mode constant water level sequencing batch reactor (SBR) system for treating wastewater. WO 2014/065859 A1 describes systems and methods for treating wastewater during conditions that may cause increased wastewater flow to the system. WO 2016/172749 A1 discloses a method for biological wastewater purification with the aid of activated sludge by means of a sewage treatment plant comprising an activated sludge tank, sedimentation and recirculation tanks, a tank for biological phosphorous removal and a tank for sedimentation and storage of settleable solids of the inflow and storage of excess sludge.

It is usually very difficult to carry out repairs of one-line biological sewage treatment plants. With the help of specially designed P tanks it is possible to operate such sewage treatment plants in two-line operation in an emergency, but this is only possible at short-term and with a small sewage plant inflow, e.g. under dry weather conditions.

It is therefore an object of the present invention to provide a method for carrying out biological purification of wastewater with the aid of activated sludge in a sewage treatment plant, which method allows for an emergency operation of the sewage treatment plant in the event of an emergency, which emergency operation is easy to implement and to perform, without the need of shutting down the whole sewage treatment plant.

Another object of the present invention is to provide a sewage treatment plant for carrying out biological purification of wastewater with the aid of activated sludge, which sewage treatment plant is suitable for carrying out the method of the present invention and allows for an emergency operation of the sewage treatment plant in the event of an emergency, which emergency operation is easy to implement and to perform, without the need of shutting down the whole sewage treatment plant.

The present invention provides a solution to said objects by providing a method according to appended claims 1 to 18.

The method is characterized in that the B tank is divided into two tanks B₁ and B₂ (hereinafter referred to as B₁ tank and B₂ tank) which are hydraulically connectable via the P tank, wherein each of the B₁ tank and the B₂ tank is continuously connected hydraulically to at least one SU tank in order to build up a one-line sewage treatment plant, wherein the P tank comprises closure means to cut off the hydraulic connection between the P tank and the B₁ tank and/or the B₂ tank, and wherein each of the SU tanks comprises an overflow unit for draining the excess water in the sewage treatment plant, wherein in said method, in the event of an emergency, the hydraulic connection between the P tank and either the B₁ tank or the B₂ tank is cut off, and the waste water is then accumulated and lifted up in the tanks that are not cut off, and the treated wastewater can effluent via the overflow unit of the respective SU tank(s).

The present invention also provides a sewage treatment plant as mentioned above, which is characterized in that the B tank is divided into two tanks B₁ and B₂ (hereinafter referred to as B₁ tank and B₂ tank) which are hydraulically connectable via the P tank, wherein each of the B₁ tank and the B₂ tank is continuously connected hydraulically to at least one SU tank, in order to build up a one-line sewage treatment plant, wherein the P tank comprises closure means to cut off the hydraulic connection between the P tank and the B₁ tank and/or the B₂ tank in events of emergency, and wherein each of the SU tanks comprises an overflow unit for draining the excess water in the sewage treatment plant.

The methods and sewage treatment plants of the present invention and as described herein allows for conducting repair of and maintenance work at tanks needing repair or maintenance work as well as for other measures that need to be taken during an event of emergency without the need of shutting down the whole sewage treatment plant.

The terms "emergency" and "event of emergency" as used herein relate to any kind of situation, in which one or more tanks of the sewage treatment plant have to be shut down or emptied, e.g. in order to enable repair of or maintenance work at the tank(s) in question.

On the other hand, the term "full operation" as used herein, relates to any kind of situation in which all tanks, i.e. whole sewage treatment plant, are operating.

The feature, "that the activated sludge is introduced from the B tank which is divided into two tanks B1 and B2, in alternation, into the at least one SU₁ tank and into the at least one SU₂ tank" means that the activated sludge is transferred from the B tank in turn into the at least one SU₁ tank and into the at least one SU₂ tank; for example, the activated sludge may be first transferred from the B tank into the at least one SU₁ tank and then from the B tank into the at least one SU₂ tank, then into the at least one SU₁ tank and then into the at least one SU₂ tank and so on and so forth. Due to this, the operating cycles (each operating cycle encompasses an S phase, an U phase, a V phase, and an A phase; see description above) that take place in the at least one SU₁ tank and the at least one SU₂ tank are phase-shifted in relation to one another; in particular, the A phase taking place in the at least one SU₁ tank borders the A phase taking place in the at least one SU₂ tank.

The activity of microorganisms in a sewage treatment plant depends on the water temperature. The efficiency of a sewage treatment plant is therefore higher in summer than in winter. A similar effect is given by not yet full utilization of the treatment plant. In order to save space and costs, it is useful to take advantage of this effect. In summer (or with incomplete utilization), fewer wastewater treatment volumes are needed than in winter. In the summer, therefore, this volume can be used for a biological phosphorus elimination. For this purpose, the P tank, which - equipped with an aeration device - may act as a biological phosphor elimination in summer and may act as a B tank during winter. The P tank also serves to optimally distribute the incoming raw sewage and the recycled sludge into the B-tank system (i.e. B1 and B2 tanks). The aerated P tank also allows cascade operation. Thus, the P tank used in the methods and plants of the present invention is multifunctional.

Preferably, the B₁ tank and B₂ tank which are hydraulically connectable via the P tank have basically the same volume.

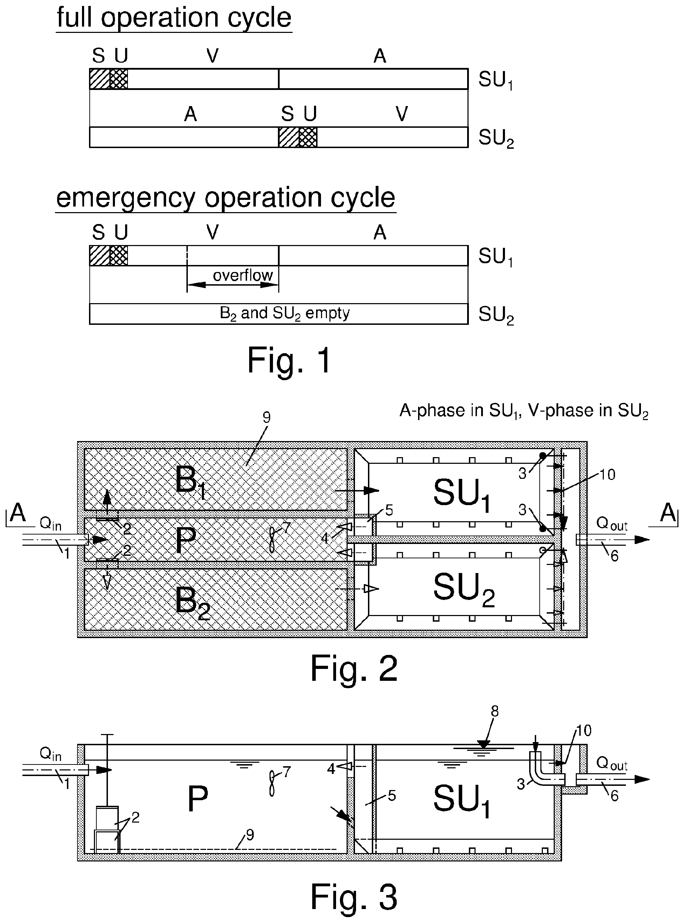

In one aspect of the method according to the invention, the P tank is positioned in the middle of the B tank and adjacent to the at least two SU tanks, and the P tank divides the B tank into the B₁ tank and the B₂ tank, wherein each of the B₁ tank and the B₂ tank is hydraulically connectable with the P tank via at least one closable opening, wherein in said method, in the event of an emergency, the hydraulic connection between the P tank and either the B₁ tank or the B₂ tank is cut off by closing the respective closable opening(s). Accordingly, in one aspect of the sewage treatment plant of the invention, the P tank is positioned in the middle of the B tank and adjacent to the at least two SU tanks, and the P tank divides the B tank into the B₁ tank and the B₂ tank, wherein each of the B₁ tank and the B₂ tank are hydraulically connectable with the P tank via at least one closable opening. Examples illustrating the principle of this aspect are shown in Fig. 2, Fig. 3, and Fig. 4.

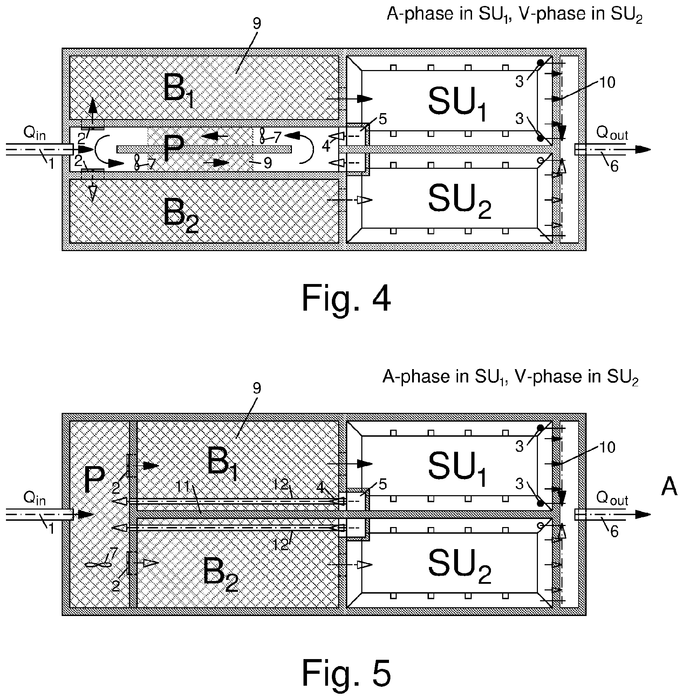

In another aspect of the method according to the invention, the B tank is located between the P tank and the SU tanks, the B tank is divided into the B₁ tank and the B₂ tank by a wall, wherein each of the B₁ tank and the B₂ tank is hydraulically connectable with the P tank via at least one closable opening, wherein, in the S phase, the thickened activated sludge is transferred via one or more pipes from the at least one SU₁ tank and the at least one SU₂ tank, respectively, into the P tank, wherein in said method, in the event of an emergency, the hydraulic connection between the P tank and either the B₁ tank or the B₂ tank is cut off by closing the respective closable opening(s). Accordingly, in one aspect of the sewage treatment plant of the invention, the B tank is located between the P tank and the SU tanks, the B tank is divided into the B₁ tank and the B₂ tank by a wall, wherein each of the B₁ tank and the B₂ tank is hydraulically connectable with the P tank via at least one closable opening, wherein each SU tank is connected with one or more pipes which pipes are adapted to transfer the thickened activated sludge from the respective SU tank into the P tank. An example illustrating the principle of this aspect is shown in Fig. 5.

In a specific aspect of the aforementioned aspects, the B₁ tank is continuously connected hydraulically to one SU₁tank and the B₂ tank is continuously connected hydraulically to one SU₂ tank, wherein in said method, in the event of an emergency, the hydraulic connection between the P tank and either the B₁ tank or the B₂ tank is cut off by closing the respective closable opening(s), in order to shut down either both the B₁ tank and SU₁ tank or both the B₂ tank and SU₂ tank, and the waste water is then accumulated and lifted up in the tanks that are not shut down, and the treated wastewater can effluent via the overflow unit of the respective SU tank that is not shut down. Accordingly, in this aspect of the sewage treatment plant of the invention, the B₁ tank is continuously connected hydraulically to one SU₁tank and the B₂ tank is continuously connected hydraulically to one SU₂ tank. For exemplary purposes, reference is made to the specific arrangements of the tanks as shown in Figs. 2-5.

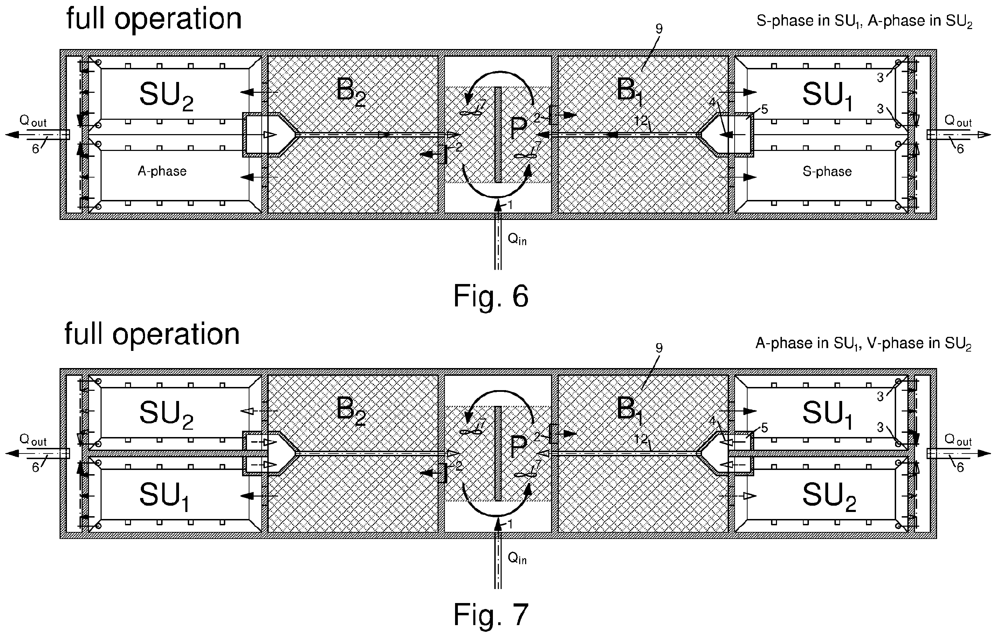

In another aspect of the method according to the invention, the P tank is positioned in the middle of the B tank and divides the B tank into the B₁ tank and the B₂ tank, wherein each of the B₁ tank and the B₂ tank is hydraulically connectable with the P tank via at least one closable opening, wherein the B₁ tank is positioned between the P tank and at least one SU tank and wherein the B₂ tank is positioned between the P tank and at least one SU tank, wherein in said method, in the event of an emergency, the hydraulic connection between the P tank and either the B₁ tank or the B₂ tank is cut off by closing the respective closable opening(s). Accordingly, in one aspect of the sewage treatment plant of the invention, the P tank is positioned in the middle of the B tank and divides the B tank into the B₁ tank and the B₂ tank, wherein each of the B₁ tank and the B₂ tank is hydraulically connectable with the P tank via at least one closable opening, wherein the B₁ tank is positioned between the P tank and at least one SU tank and wherein the B₂ tank is positioned between the P tank and at least one SU tank. Examples illustrating the principle of this aspect are shown in Fig. 6 and Fig. 7.

In a specific aspect of the aforementioned aspect, the B₁ tank is continuously connected hydraulically to one SU₁ tank, and the B₂ tank is continuously connected hydraulically to one SU₂ tank, wherein in said method, in the event of an emergency, the hydraulic connection between the P tank and either the B₁ tank or the B₂ tank is cut off by closing the respective closable opening(s), in order to shut down either both the B₁ tank and SU₁ tank or both the B₂ tank and SU₂ tank, and the waste water is then accumulated and lifted up in the tanks that are not shut down, and the treated wastewater can effluent via the overflow unit of the respective SU tank that is not shut down. Accordingly, in a specific aspect of the sewage treatment plant of the invention, the B₁ tank is continuously connected hydraulically to one SU₁ tank, and the B₂ tank is continuously connected hydraulically to one SU₂ tank. For exemplary purposes, reference is made to the specific arrangement of the tanks as per the embodiment shown in Fig. 6.

In another specific aspect of the aforementioned aspect, the B₁ tank is continuously connected hydraulically to one SU₁ tank and one SU₂ tank (hereinafter referred to as "tanks B₁-SU₁-SUi'), and the B₂ tank is continuously connected hydraulically to one SU₁ tank and one SU₂ tank (hereinafter referred to as "tanks B₂-SU₁-SU₂"), wherein in said method, in the event of an emergency, the hydraulic connection between the P tank and either the B₁ tank or the B₂ tank is cut off by closing the respective closable opening(s), which leads to a shut-down of either tanks B₁-SU₁-SU₂ or tanks B₂-SU₁-SU₂, and the waste water is then accumulated and lifted up in the tanks that are not shut down, and the treated wastewater level can ascent up to the upper edge of the overflow unit of the respective SU tanks that are not shut down. Accordingly, in a specific aspect of the sewage treatment plant of the invention, the B₁ tank is continuously connected hydraulically to one SU₁ tank and one SU₂ tank (hereinafter referred to as "tanks B₁-SU₁-SU₂"), and the B₂ tank is continuously connected hydraulically to one SU₁ tank and one SU₂ tank (hereinafter referred to as "tanks B₂-SU₁-SUi'). For exemplary purposes, reference is made to the specific arrangement of the tanks as per the embodiment shown in Fig. 7.

Preferably, the excess sludge is pumped from the SU tanks into the P tanks via airlifts and at least two pipes.

In one aspect of the method according to the invention, during full operation of all tanks, in the S-phase, the thickened activated sludge is largely channeled into the B₁ tank and the B₂ tank, respectively and the P tank primarily has the task to divide the incoming wastewater to B1 and B2.

In one aspect of the method according to the invention, the P tank is aerated and, optionally, also the B₁ tank and the B₂ tank.

In one aspect of the method and the sewage treatment plant according to the invention, the P tank comprises aeration and/or stirring units that are removable for repairs.

In one aspect of the method according to the invention, the tanks that are cut off in the case of an emergency, are emptied for a short time, e.g. for repair, while at the same time the biological purification of wastewater is operated with the tanks that are not shut down.

In one aspect of the method according to the invention, in full operation of all tanks the aeration in the P tank is activated and a biological phosphorus elimination is dispensed with.

In one aspect of the method according to the invention, in full operation of all tanks the aeration in the P tank is switched off and the biological phosphorus elimination goes into operation.

In one aspect of the method according to the invention, the contents of the P tank are mixed permanently or intermittently with a stirring system.

In one aspect of the method and the sewage treatment plant according to the invention, the P tank is constructed in form of a circulation tank.

In another aspect of the method according to the invention, in the event of an emergency, an agent for enhancing sludge sedimentation, preferably a flocculant, is added to one or more of the tanks that are not cut off, i.e. the one or more tanks that are still in operation. The addition of an agent for enhancing the sedimentation of the activated sludge, preferably a flocculant, enhances the hydraulic capacity of the tanks that are still in operation. The agent for enhancing the sedimentation of the activated sludge is preferably a flocculant. Flocculants used in sewage treatment and sludge sedimentation are well-known in the art, for example flocculants based on calcium hydroxide.

Alternatively or in addition to adding an agent for enhancing sludge sedimentation, the hydraulic capacity of the tanks being still in operation in the event of an emergency can also be enhanced by removing excess sludge from the SU tank(s) that is/ are not cut off. Preferably the excess sludge is removed at ground level from said SU tank(s), more preferably from a distance of about 1 m above the ground of the SU tank(s). If the respective SU tank comprises an airlift unit, which is typically located at or close to a side wall of the SU tank, the excess sludge is preferably removed at ground level, preferably at about 1 m above the ground of the SU tank, in a certain distance from the airlift unit, e.g. near a side wall of the SU tank that is opposite the side wall where the airlift unit is located.

Further details of the present invention will emerge from the following drawings, which illustrate exemplary, non-limiting embodiments of the invention. In the drawings, two operating cycles (Fig. 1) and different exemplary embodiments of wastewater treatment systems (Fig. 2 - Fig. 7) according to the present invention are shown.
- **Fig. 1**: shows two operating cycles (full operation cycle and emergency operation cycle) for the SU tanks SU₁ and SU₂ shown in the exemplary embodiments of Figs. 2 - 6 and a possible operation of the overflow 3;
- **Fig. 2**: shows a schematic illustration of a first embodiment of the present invention (top view);
- **Fig. 3**: shows a vertical sectional view of the embodiment of Fig. 2;
- **Fig. 4**: shows a schematic illustration of a second embodiment of the present invention (top view), with a P tank in form of a circulation tank (top view);
- **Fig. 5**: shows a schematic illustration of a third embodiment of the present invention (top view);
- **Fig. 6**: shows a schematic illustration of a fourth embodiment of the present invention (top view);
- **Fig. 7**: shows a schematic illustration of a fifth embodiment of the present invention (top view).

As mentioned above, the activity of microorganisms in a sewage treatment plant depends on the water temperature. The efficiency of a sewage treatment plant is therefore higher in summer than in winter. A similar effect is given by not yet full utilization of the treatment plant. In order to save space and costs, it is useful to take advantage of this effect. In summer (or with incomplete utilization), fewer wastewater treatment volumes are needed than in winter. In the summer, therefore, this volume can be used for a biological phosphorus elimination. For this purpose, the P tank described in Figs. 2-7, which - equipped with an aeration device - may act as a biological phosphor elimination in summer and may act as a B tank during winter. The P tank also serves to optimally distribute the incoming raw sewage and the recycled sludge into the B tank system (i.e. B1 and B2 tanks). The aerated P tank also allows cascade operation. Thus, the P tank as used in this invention and described in the embodiments of accompanying Figs. 2-7 is multifunctional.

**Fig. 1** shows the operating cycle for the SU tanks SU₁ and SU₂ shown as per the exemplary embodiments of Figs. 2 - 6, wherein time extends in horizontal direction from left to right. The course and function of the individual phases, i.e. S phase, U phase, V phase and A phase, taking place in the respective SU tanks, have already been discussed above in greater detail. In this figure "a full operation cycle" and an "emergency operation cycle" and a possible operation of the overflow unit (see Figs. 2-6, overflow unit 3 of the SU tanks) are shown. The "emergency operation cycle" illustrates the course and function of the phases, when the B₂ tank and SU₂ tank of the embodiments shown in Figs. 2-6 have been shut down and emptied due to an event of emergency (e.g. if the B₂ or SU₂ tank needs repair or maintenance work).

**Fig. 2** shows a schematic illustration of a wastewater treatment system, in which two SU tanks SU₁ and SU₂ are arranged side by side on one side of the B tank and adjacent to the P tank. The B tank is divided into a B₁ tank and B₂ tank by the P tank. In this illustration, currently an A-phase takes place in the SU₁ tank, wherein in the SU₂ tank, a V-phase takes place (description of the different phases, see above). The flow of the wastewater in the P tank is signified with 1 and the flow out of the system with 6. The thickened activated sludge 4 is transferred from the SU tanks to the P tank with airlifts 5 (during the S-phase). The hydraulic connection and water flow from the P tank to the B₁ and B₂ tanks is realized by means of closable openings 2. The closable openings comprise flat slides to cut off the hydraulic connection between the P tank and the B₁ tank or the B₂ tank in events of emergency. The contents of the P tank can also be homogenized with a stirring device 7. Both the B-tank and the P tank are supplied with aeration 9.

In the **"full operation"** the closable openings 2 between the P tank and the B₁ tank and B₂ tank, respectively, are open and all tanks are in operation with an approximate constant water level (throughflow-principle). This one-line system can be in operation with or without a biological phosphor elimination. In this case, the overflow units 3 which are part of the SU tanks is not needed. If the aeration 9 in the P tank is in action, a cascade method is achieved.

In the **"emergency operation"** part of the tanks, i.e. either B₁ and SU₁ or B₂ and SU₂, can be taken out of service and emptied by closing the respective closable opening 2 (either between P tank and B₁ tank or between P tank and B₂ tank) by means of the slide. In other words, the hydraulic connection between the P tank and the B₁ tank or the B₂ tank is closed, leading to a cut-off/shut-down of either the B₁ and SU₁ tanks or B₂ and SU₂ tanks. In this case, the water level rises in the S-, U- and first half of the V-phase. As the water level rises, the sludge settles in the SU-tank that is not shut down. After approximately 30 min, the water level reaches the level of the emergency overflow unit 3 of the SU tank that is not taken out of service, treated wastewater without the sludge can drain off and a maximum height of the water level is not exceeded. In the subsequent A-phase, an effluent device 10 opens, whereby the water level assumes a lower level. In this case we speak of "filling up principle".

**Fig. 3** shows a vertical sectional view of the system of Fig. 2 (along a line which, in Fig. 2, extends between A-A). Qᵢₙ signifies the flow of the wastewater introduced into the P tank, wherein Qₒᵤₜ is the flow of the treated water flowing off from the water treatment system.

The thickened activated and aerated sludge 4 is transferred from the SU tanks SU₁ and SU₂ into the P tank via e.g. a pipe. In order to mix the waste water in the P tank efficiently with the thickened activated sludge 4, the volume of the P tank is mixed permanently or intermittently. The mixture of waste water and sludge is then transferred into the B tank and further to the SU tanks SU₁ and SU₂ via the one or more closable openings 2 connecting the P tank with the B₁ tank and B₂ tank as described above. For transferring the waste water from the B₁ tank and the B₂ tank to the SU tanks SU₁ and SU₂, respectively, one or more closable openings are also provided between the B₁ tank and the SU₁ tank as well as between the B₂ tank and the SU₂ tank; see Fig. 2. 5 signifies the airlift operation unit for operation of the S phase. A maximum height of the water level 8 is not exceeded.

**Fig. 4** shows a schematic illustration of a second embodiment of the present invention (top view). The second embodiment fully corresponds to the embodiment as shown in Figs. 2 and 3, with the only exception that the P tank is in form of a circulation tank. As in Figs 2 and 3, also in this illustration, currently an A-phase takes place in the SU₁ tank, wherein in the SU₂ tank, a V-phase takes place (description of the different phases, see above).

**Fig. 5** shows a schematic illustration of a third embodiment of the present invention (top view). The arrangement of the P, B and SU tanks in this embodiment is slightly different from the arrangement shown in Figs. 2-4 as described above, but the applied "full operation" mode and "emergency operation" mode as described above in relation to Figs. 2-4 apply, mutatis mutandis, to the embodiment of Fig. 5. Features in Fig. 5 are provided with the same reference signs as the corresponding features already described above in relation to the embodiments shown in Figs. 2-4.

In the embodiment shown in Fig. 5, the B tank is located between the P tank and the SU tanks, the B tank is divided into the B₁ tank and the B₂ tank by a wall 11, wherein each of the B₁ tank and the B₂ tank is hydraulically connectable with the P tank via at least one closable opening 2. In the S phase, the thickened activated sludge is transferred via one or more pipes 12 from the SU₁ tank and the SU₂ tank, respectively, into the P tank, wherein in said method, in the event of an emergency, the hydraulic connection between the P tank and either the B₁ tank or the B₂ tank is cut off by closing the respective closable opening(s) 2.

As in the embodiments shown in Figs. 2-4, also in the embodiment of Fig. 5, the B₁ tank is continuously connected hydraulically to the SU₁tank and the B₂ tank is continuously connected hydraulically to the SU₂ tank, wherein in the event of an emergency, the hydraulic connection between the P tank and either the B₁ tank or the B₂ tank is cut off by closing the respective closable opening(s) 2, in order to shut down either both the B₁ tank and SU₁ tank or both the B₂ tank and SU₂ tank, and the waste water is then accumulated and lifted up in the tanks that are not shut down, and the treated wastewater can effluent via the overflow unit 3 of the respective SU tank that is not shut down.

**Fig. 6** shows a schematic illustration of a fourth embodiment of the present invention (top view). The arrangement of the P, B and SU tanks in this embodiment is different from the arrangements as described above, but the applied "full operation" mode and "emergency operation" mode as described above in relation to Figs. 2-4 apply, mutatis mutandis, for the arrangement of Fig. 6. Features in Fig. 6 are provided with the same reference signs as the corresponding features already described above in relation to the embodiments shown in Figs. 2-4.

In the embodiment shown in Fig. 6 the P tank is positioned in the middle of the B tank and divides the B tank into the B₁ tank and the B₂ tank, wherein each of the B₁ tank and the B₂ tank is hydraulically connectable with the P tank via at least one closable opening 2, wherein the B₁ tank is positioned between the P tank and the SU₁ tank and wherein the B₂ tank is positioned between the P tank and the SU₂ tank, wherein in said method, in the event of an emergency, the hydraulic connection between the P tank and either the B₁ tank or the B₂ tank is cut off by closing the respective closable opening(s) 2. In the embodiment of Fig. 6, the B₁ tank is continuously connected hydraulically to the SU₁ tank, and the B₂ tank is continuously connected hydraulically to the SU₂ tank, wherein, in the event of an emergency, the hydraulic connection between the P tank and either the B₁ tank or the B₂ tank is cut off by closing the respective closable opening(s) 2, in order to shut down either both the B₁ tank and SU₁ tank or both the B₂ tank and SU₂ tank, and the waste water is then accumulated and lifted up in the tanks that are not shut down, and the treated wastewater can effluent via the overflow unit 3 of the respective SU tank that is not shut down.

The P tank of Fig. 6 has the form of a circulation tank. The flow of the wastewater in the P tank is signified with 1 and the flow of the treated water out of the system with 6. The thickened activated sludge 4 is pumped from the SU₁ and SU₂ tanks into the P tank by means of airlifts 5 and pipes 12.

**Fig. 7** shows a schematic illustration of a fifth embodiment of the present invention (top view). The arrangement of the P, B and SU tanks in this embodiment is different from the arrangements as described above, but the applied "full operation" mode and "emergency operation" mode as described above in relation to Figs. 2-4 apply, mutatis mutandis, for the arrangement of Fig. 7. Features in Fig. 7 are provided with the same reference signs as the corresponding features already described above in relation to the embodiments shown in Figs. 2-4.

In the embodiment shown in Fig. 7 the P tank is positioned in the middle of the B tank and divides the B tank into the B₁ tank and the B₂ tank, wherein each of the B₁ tank and the B₂ tank is hydraulically connectable with the P tank via at least one closable opening 2, wherein the B₁ tank is positioned between the P tank and one SU₁ tank and one SU₂ tank and wherein the B₂ tank is positioned between the P tank and one SU₁ tank and one SU₂ tank, wherein, in the event of an emergency, the hydraulic connection between the P tank and either the B₁ tank or the B₂ tank is cut off by closing the respective closable opening(s) 2. Accordingly, in the embodiment shown in Fig. 7, the B₁ tank is continuously connected hydraulically to one SU₁ tank and one SU₂ tank (hereinafter referred to as "tanks B₁-SU₁-SU₂"), and the B₂ tank is continuously connected hydraulically to one SU₁ tank and one SU₂ tank (hereinafter referred to as "tanks B₂-SU₁-SU₂"), wherein, in the event of an emergency, the hydraulic connection between the P tank and either the B₁ tank or the B₂ tank is cut off by closing the respective closable opening(s) 2, which leads to a shut-down of either tanks B₁-SU₁-SU₂ or tanks B₂-SU₁-SU₂, and the waste water is then accumulated and lifted up in the tanks that are not shut down, and the treated wastewater level can ascent up to the upper edge of the overflow unit of the respective SU tanks that are not shut down.

The P tank of Fig. 7 has the form of a circulation tank. The flow of the wastewater in the P tank is signified with 1 and the flow of the treated water out of the system with 6. The thickened activated sludge 4 is pumped from the SU₁ and SU₂ tanks (i.e. a total of four SU tanks) into the P tank by means of airlifts 5 and pipes 12.

In the embodiments illustrated in Figs. 2-7, only one closable opening 2 that hydraulically connects the P tank with the B₁ tank as well as the P tank with the B₂ tank is shown in the drawings. It will, however, be clear to the skilled person, that more than one closable opening 2 between the P tank and the B₁ tank as well as between the P tank and the B₂ tank may be foreseen.

## Claims

1. A method for carrying out biological purification of wastewater with the aid of activated sludge in a sewage treatment plant, which method allows for an emergency operation of the sewage treatment plant, wherein in said emergency operation one or more tanks of the sewage treatment plant are shut down or emptied to allow for e.g. repair or maintenance work, wherein the sewage treatment plant comprises:
• an activated sludge tank that can be ventilated (hereinafter referred to as the B tank),
• at least two sedimentation and recirculation tanks (hereinafter referred to as SU tanks), wherein the at least two SU tanks include at least one first sedimentation and recirculation tank (hereinafter referred to as SU₁ tank) and at least one second sedimentation and recirculation tank (hereinafter referred to as SU₂ tank), wherein the at least one SU₁ tank and the at least one SU₂ tank are continuously connected hydraulically to the B tank, wherein in the at least one SU₁ tank and in the at least one SU₂ tank a number of operating cycles are carried out over the course of a day, including a sludge return phase, a recirculation phase, a pre-sedimentation phase and a draw-off phase (hereinafter referred to as the S phase, U phase, V phase, and A phase, respectively), and
• a tank for biological phosphor elimination (hereinafter referred to as P tank), wherein the P tank is hydraulically connected with the B tank via one or more openings, and wherein the volume of the P tank is mixed permanently or intermittently,
wherein in said method the wastewater is first introduced into the P tank and subsequently into the B tank, and then from the B tank, in alternation, into the at least one SU₁ tank and into the at least one SU₂ tank,
wherein consecutively, in the S phase at least part of the thickened activated sludge is introduced from the at least one SU₁ tank and the at least one SU₂ tank, respectively, into the P tank, in the U phase the thickened activated sludge is again mixed with the water, in the V phase the activated sludge is sedimented, and in the A phase treated water is drawn off by opening an effluent device of the respective SU tank, wherein in the at least one SU₁ tank and the at least one SU₂ tank said operating cycles are phase-shifted in relation to one another, the A phases in the at least one SU₁ tank and the at least one SU₂ tank border one another, a flow passes through the at least one SU₁ tank and the at least one SU₂ tank, respectively, merely in the A phases, an approximately constant water level is provided and therefore a wastewater treatment system discharge corresponding to the wastewater treatment system supply develops ("continuous flow" principle),
**characterized in that**
the B tank is divided into two tanks B₁ and B₂ (hereinafter referred to as B₁ tank and B₂ tank) which are hydraulically connectable via the P tank, wherein the B₁ tank is continuously connected hydraulically to at least one SU tank and the B₂ tank is continuously connected hydraulically to at least one SU tank, in order to build up a one-line sewage treatment plant, wherein the P tank comprises closure means to cut off the hydraulic connection between the P tank and the B₁ tank and/or the B₂ tank, and wherein each of the SU tanks comprises an overflow unit for draining excess treated wastewater in the sewage treatment plant,
wherein in the emergency operation the hydraulic connection between the P tank and either the B₁ tank or the B₂ tank is cut off, wherein in the S phase, the U phase and the first half of the V phase, the waste water is then accumulated and lifted up in the tanks that are not cut off, the sludge settles in the respective SU tank(s), and the excess treated wastewater without the sludge can effluent via the overflow unit of the respective SU tank(s) and a maximum height of the water level in the tanks is not exceeded, and, wherein in the A-phase, when treated water is drawn off by opening the effluent device of the respective SU tank(s), the water level assumes a lower level.

2. The method according to claim 1, **characterized in that**:
the P tank is positioned in the middle of the B tank and adjacent to the at least two SU tanks, and the P tank divides the B tank into the B₁ tank and the B₂ tank, wherein each of the B₁ tank and the B₂ tank is hydraulically connectable with the P tank via at least one closable opening, wherein in said method, in the event of an emergency, the hydraulic connection between the P tank and either the B₁ tank or the B₂ tank is cut off by closing the respective closable opening(s);
or **characterized in that**:
the B tank is located between the P tank and the SU tanks, the B tank is divided into the B₁ tank and the B₂ tank by a wall, wherein each of the B₁ tank and the B₂ tank is hydraulically connectable with the P tank via at least one closable opening, wherein, in the S phase, the thickened activated sludge is transferred via one or more pipes from the at least one SU₁ tank and the at least one SU₂ tank, respectively, into the P tank, wherein in said method, in the event of an emergency, the hydraulic connection between the P tank and either the B₁ tank or the B₂ tank is cut off by closing the respective closable opening(s).

3. The method according to claim 2, wherein the B₁ tank is continuously connected hydraulically to one SU₁tank and wherein the B₂ tank is continuously connected hydraulically to one SU₂ tank, wherein in said method, in the event of an emergency, the hydraulic connection between the P tank and either the B₁ tank or the B₂ tank is cut off by closing the respective closable opening(s), in order to shut down either both the B₁ tank and SU₁ tank or both the B₂ tank and SU₂ tank, and the waste water is then accumulated and lifted up in the tanks that are not shut down, and the treated wastewater can effluent via the overflow unit of the respective SU tank that is not shut down.

4. The method according to claim 1, **characterized in that** the P tank is positioned in the middle of the B tank and divides the B tank into the B₁ tank and the B₂ tank, wherein each of the B₁ tank and the B₂ tank is hydraulically connectable with the P tank via at least one closable opening, wherein the B₁ tank is positioned between the P tank and at least one SU tank and wherein the B₂ tank is positioned between the P tank and at least one SU tank, wherein in said method, in the event of an emergency, the hydraulic connection between the P tank and either the B₁ tank or the B₂ tank is cut off by closing the respective closable opening(s).

5. The method according to claim 4, **characterized in that**:
the B₁ tank is continuously connected hydraulically to one SU₁ tank, and the B₂ tank is continuously connected hydraulically to one SU₂ tank, wherein in said method, in the event of an emergency, the hydraulic connection between the P tank and either the B₁ tank or the B₂ tank is cut off by closing the respective closable opening(s), in order to shut down either both the B₁ tank and SU₁ tank or both the B₂ tank and SU₂ tank, and the waste water is then accumulated and lifted up in the tanks that are not shut down, and the treated wastewater can effluent via the overflow unit of the respective SU tank that is not shut down;
or **characterized in that**:
the B₁ tank is continuously connected hydraulically to one SU₁ tank and one SU₂ tank (hereinafter referred to as "tanks B₁-SU₁-SU₂"), and the B₂ tank is continuously connected hydraulically to one SU₁ tank and one SU₂ tank (hereinafter referred to as "tanks B₂-SU₁-SU₂"), wherein in said method, in the event of an emergency, the hydraulic connection between the P tank and either the B₁ tank or the B₂ tank is cut off by closing the respective closable opening(s), which leads to a shut-down of either tanks B₁-SU₁-SU₂ or tanks B₂-SU₁-SU₂, and the waste water is then accumulated and lifted up in the tanks that are not shut down, and the treated wastewater level can ascent up to the upper edge of the overflow unit of the respective SU tanks that are not shut down.

6. The method according claim 1, **characterized in that** the B tank is located between the P tank and the SU tanks, the B tank is divided into the B₁ tank and the B₂ tank by a wall, wherein each of the B₁ tank and the B₂ tank is hydraulically connectable with the P tank via at least one closable opening, wherein, in the S phase, the thickened activated sludge is transferred via one or more pipes from the at least one SU₁ tank and the at least one SU₂ tank, respectively, into the P tank, wherein in said method, in the event of an emergency, the hydraulic connection between the P tank and either the B₁ tank or the B₂ tank is cut off by closing the respective closable opening(s), wherein, during the full operation phase, in the S-phase, the thickened activated sludge is largely channeled into the B₁ tank and the B₂ tank, respectively and the P tank primarily has the task to divide the incoming wastewater to B1 and B₂.

7. The method according to any one of claims 1 to 6, **characterized in that** the P tank is aerated and, optionally, also the B₁ tank and the B₂ tank.

8. The method according any one of claims 1 to 7, **characterized in that** the P tank comprises aeration and/or stirring units that are removable for repairs.

9. The method according to any one of claims 1 to 8, **characterized in that** the tanks that are cut off in the event of emergency, are emptied for a short time, e.g. for repair, while at the same time the biological purification of wastewater is operated with the tanks that are not shut down.

10. The method according to claim 7, **characterized in that** the P tank comprises aeration units or aeration units and stirring units, wherein:
in full operation of all tanks the aeration in the P tank is activated and a biological phosphorus elimination is dispensed with;
or wherein:
in full operation of all tanks the aeration in the P tank is switched off and the biological phosphorus elimination goes into operation.

11. The method according to any one of claims 1 to 10, **characterized in that**, in the event of an emergency, an agent for enhancing sludge sedimentation, preferably a flocculant, is added to one or more of the tanks that are not cut off.

12. The method according to any one of claims 1 to 11, **characterized in that**, in the event of an emergency, the excess sludge is removed from the SU tank(s) that is/are not cut off.

13. A sewage treatment plant for carrying out biological purification of wastewater with the aid of activated sludge (4), wherein the sewage treatment plant is configured to allow for operating in an emergency operation, wherein in said emergency operation one or more tanks of the sewage treatment plant are shut down or emptied to allow for e.g. repair or maintenance work, wherein the sewage treatment plant comprises:
• an activated sludge tank that can be ventilated (hereinafter referred to as the B tank),
• at least two sedimentation and recirculation tanks (hereinafter referred to as SU tanks), wherein the at least two SU tanks include at least one first sedimentation and recirculation tank (hereinafter referred to as SU₁ tank) and at least one second sedimentation and recirculation tank (hereinafter referred to as SU₂ tank), wherein the at least one SU₁ tank and the at least one SU₂ tank are continuously connected hydraulically to the B tank, wherein the at least one SU₁ tank and the at least one SU₂ tank are configured to carry out a number of operating cycles over the course of a day, including a sludge return phase, a recirculation phase, a pre-sedimentation phase and a draw-off phase (hereinafter referred to as the S phase, U phase, V phase, and A phase, respectively), wherein each of the SU tanks comprises an effluent device (10) configured to be opened during the A phase, and
• a tank for biological phosphor elimination (hereinafter referred to as P tank), wherein the P tank is hydraulically connected with the B tank via one or more openings (2), and wherein the volume of the P tank is mixed permanently or intermittently,
wherein the sewage treatment plant is configured to first introduce the wastewater into the P tank and subsequently into the B tank, and then from the B tank, in alternation, into the at least one SU₁ tank and into the at least one SU₂ tank,
wherein the sewage treatment plant is configured to consecutively, in the S phase introduce at least part of the thickened activated sludge from the at least one SU₁ tank and the at least one SU₂ tank, respectively, into the P tank, in the U phase mix the thickened activated sludge again with the water, in the V phase have the activated sludge sedimented, and in the A phase draw off treated water by opening an effluent device of the respective SU tank, wherein in the at least one SU₁ tank and the at least one SU₂ tank said operating cycles are phase-shifted in relation to one another, the A phases in the at least one SU₁ tank and the at least one SU₂ tank border one another, a flow passes through the at least one SU₁ tank and the at least one SU₂ tank, respectively, merely in the A phases, an approximately constant water level is provided and therefore a wastewater treatment system discharge corresponding to the wastewater treatment system supply develops ("continuous flow" principle),
**characterized in that**
the B tank is divided into two tanks B₁ and B₂ (hereinafter referred to as B₁ tank and B₂ tank) which are hydraulically connectable via the P tank, wherein the B₁ tank is continuously connected hydraulically to at least one SU tank and the B₂ tank is continuously connected hydraulically to at least one SU tank, in order to build up a one-line sewage treatment plant,
wherein the P tank comprises closure means to cut off the hydraulic connection between the P tank and the B₁ tank and/or the B₂ tank;
wherein, when the sewage treatment plant operates in the emergency operation, the closure means are configured to cut off the hydraulic connection between the P tank and either the B₁ tank or the B₂ tank, and
wherein each of the SU tanks comprises an overflow unit (3) which is configured to drain excess treated wastewater without the sludge in the sewage treatment plant in said emergency operation, wherein, in the S phase, the U phase and the first half of the V phase, the waste water rises in the tanks that are not cut off, and a maximum height of the water level (8) in the tanks is not exceeded, and
wherein in said emergency operation, the effluent device (10) of the respective SU tank is configured to be opened during the A phase, whereby the water level assumes a lower level.

14. The sewage treatment plant according to claim 13, **characterized in that**:
the P tank is positioned in the middle of the B tank and adjacent to the at least two SU tanks, and the P tank divides the B tank into the B₁ tank and the B₂ tank, wherein each of the B₁ tank and the B₂ tank are hydraulically connectable with the P tank via at least one closable opening (2);
or **characterized in that**:
the B tank is located between the P tank and the SU tanks, the B tank is divided into the B₁ tank and the B₂ tank by a wall (11), wherein each of the B₁ tank and the B₂ tank is hydraulically connectable with the P tank via at least one closable opening, wherein each SU tank is connected with one or more pipes (12) which pipes are adapted to transfer the thickened activated sludge (4) from the respective SU tank into the P tank.

15. The sewage treatment plant according to claim 14, **characterized in that** the B₁ tank is continuously connected hydraulically to one SU₁tank and wherein the B₂ tank is continuously connected hydraulically to one SU₂ tank.

16. The sewage treatment plant according to claim 13, **characterized in that** the P tank is positioned in the middle of the B tank and divides the B tank into the B₁ tank and the B₂ tank, wherein each of the B₁ tank and the B₂ tank is hydraulically connectable with the P tank via at least one closable opening (2), wherein the B₁ tank is positioned between the P tank and at least one SU tank and wherein the B₂ tank is positioned between the P tank and at least one SU tank.

17. The sewage treatment plant according to claim 16, **characterized in that** the B₁ tank is continuously connected hydraulically to one SU₁ tank, and the B₂ tank is continuously connected hydraulically to one SU₂ tank;
or **in that**
the B₁ tank is continuously connected hydraulically to one SU₁ tank and one SU₂ tank (hereinafter referred to as "tanks B₁-SU₁-SU₂"), and the B₂ tank is continuously connected hydraulically to one SU₁ tank and one SU₂ tank (hereinafter referred to as "tanks B₂-SU₁-SU₂").

18. The sewage treatment plant according any one of claims 13 to 17, **characterized in that** the P tank is constructed in form of a circulation tank.

## Patentansprüche

1. Verfahren zur Durchführung einer biologischen Reinigung von Abwasser mit Hilfe von Belebtschlamm in einer Kläranlage, wobei das Verfahren einen Notbetrieb der Kläranlage ermöglicht, wobei in dem Notbetrieb ein oder mehrere Becken der Kläranlage abgeschaltet oder entleert werden, um beispielsweise Reparatur- oder Wartungsarbeiten zu ermöglichen, wobei die Kläranlage umfasst:
• einen belüftbaren Belebtschlammbehälter (im Folgenden als B-Behälter bezeichnet),
• mindestens zwei Sedimentations- und Rezirkulationsbehälter (im Folgenden als SU-Behälter bezeichnet), wobei die mindestens zwei SU-Behälter mindestens einen ersten Sedimentations- und Rezirkulationsbehälter (im Folgenden als SU1-Behälter bezeichnet) und mindestens einen zweiten Sedimentations- und Rezirkulationsbehälter (im Folgenden als SU2-Tank bezeichnet), wobei der mindestens eine SU1-Tank und der mindestens eine SU2-Tank hydraulisch kontinuierlich mit dem B-Tank verbunden sind, wobei in dem mindestens einen SU1-Tank und in dem mindestens einen SU2-Tank im Laufe eines Tages eine Anzahl von Betriebszyklen durchgeführt wird, einschließlich einer Schlammrückführungsphase, einer Rezirkulationsphase, einer Vorklärphase und einer Abzugsphase (im Folgenden als S-Phase, U-Phase, V-Phase bzw. A-Phase bezeichnet) durchgeführt werden, und
• ein Tank zur biologischen Phosphorelimination (im Folgenden als P-Tank bezeichnet), wobei der P-Tank über eine oder mehrere Öffnungen hydraulisch mit dem B-Tank verbunden ist und wobei das Volumen des P-Tanks permanent oder intermittierend gemischt wird,
wobei bei dem Verfahren das Abwasser zunächst in den P-Tank und anschließend in den B-Tank eingeleitet wird und dann aus dem B-Tank abwechselnd in den mindestens einen SU1-Tank und in den mindestens einen SU2-Tank,
wobei nacheinander in der S-Phase mindestens ein Teil des eingedickten Belebtschlamms aus dem mindestens einen SU1-Tank bzw. dem mindestens einen SU2-Tank in den P-Tank eingeleitet wird, in der U-Phase der eingedickte Belebtschlamm erneut mit dem Wasser vermischt wird, in der V-Phase der Belebtschlamm sedimentiert wird und in der A-Phase behandeltes Wasser durch Öffnen einer Ablaufvorrichtung des jeweiligen SU-Tanks abgezogen wird, wobei in dem mindestens einen SU1-Tank und dem mindestens einen SU2-Tank die Betriebszyklen zueinander phasenverschoben sind, die A-Phasen im mindestens einen SU1-Tank und im mindestens einen SU2-Tank aneinandergrenzen, ein Durchfluss lediglich in den A-Phasen durch den mindestens einen SU1-Tank bzw. den mindestens einen SU2-Tank erfolgt, ein annähernd konstanter Wasserstand bereitgestellt wird und sich daher ein der Abwasserbehandlungsanlage zugeführter Abwasserbehandlungsanlagenabfluss entwickelt (Prinzip des "kontinuierlichen Durchflusses"),
**dadurch gekennzeichnet, dass**
der B-Tank in zwei Tanks B1 und B2 (im Folgenden als B1-Tank und B2-Tank bezeichnet) unterteilt ist, die über den P-Tank hydraulisch miteinander verbunden werden können, wobei der B1-Tank kontinuierlich mit mindestens einem SU-Tank hydraulisch verbunden ist und der B2-Tank kontinuierlich mit mindestens einem SU-Tank hydraulisch verbunden ist, um eine Einlinien-Kläranlage aufzubauen, wobei der P-Tank Verschlussmittel umfasst, um die hydraulische Verbindung zwischen dem P-Tank und dem B1-Tank und/oder dem B2-Tank zu unterbrechen, und wobei jeder der SU-Tanks eine Überlaufeinheit zum Ablassen von überschüssigem behandeltem Abwasser in der Kläranlage umfasst,
wobei im Notbetrieb die hydraulische Verbindung zwischen dem P-Tank und entweder dem B1-Tank oder dem B2-Tank unterbrochen wird, wobei in der S-Phase, der U-Phase und der ersten Hälfte der V-Phase das Abwasser dann in den nicht unterbrochenen Tanks gesammelt und angehoben wird, sich der Schlamm in dem/den jeweiligen SU-Tank(s) absetzt und das überschüssige behandelte Abwasser ohne den Schlamm über die Überlaufeinheit des jeweiligen SU-Tanks (der jeweiligen SU-Tanks) abfließen kann und eine maximale Höhe des Wasserstands in den Tanks nicht überschritten wird, und wobei in der A-Phase, wenn behandeltes Wasser durch Öffnen der Abflussvorrichtung des jeweiligen SU-Tanks (der jeweiligen SU-Tanks) abgezogen wird, der Wasserstand ein niedrigeres Niveau annimmt.

2. Verfahren nach Anspruch 1, **dadurch gekennzeichnet, dass**:
der P-Tank in der Mitte des B-Tanks und neben den mindestens zwei SU-Tanks positioniert ist, und der P-Tank den B-Tank in den B1-Tank und den B2-Tank unterteilt, wobei jeder der B1-Tanks und der B2-Tanks über mindestens eine verschließbare Öffnung hydraulisch mit dem P-Tank verbunden werden kann, wobei bei diesem Verfahren im Notfall die hydraulische Verbindung zwischen dem P-Tank und entweder dem B1-Tank oder dem B2-Tank durch Schließen der jeweiligen verschließbaren Öffnung(en) unterbrochen wird;
oder **dadurch gekennzeichnet, dass**:
der B-Tank zwischen dem P-Tank und den SU-Tanks angeordnet ist, der B-Tank durch eine Wand in den B1-Tank und den B2-Tank unterteilt ist, wobei jeder der B1-Tanks und der B2-Tanks über mindestens eine verschließbare Öffnung hydraulisch mit dem P-Tank verbindbar ist, wobei in der S-Phase der eingedickte Belebtschlamm über eine oder mehrere Leitungen aus dem mindestens einen SU1-Tank bzw. dem mindestens einen SU2-Tank in den P-Tank überführt wird, wobei bei dem Verfahren im Notfall die hydraulische Verbindung zwischen dem P-Tank und entweder dem B1-Tank oder dem B2-Tank durch Schließen der jeweiligen verschließbaren Öffnung(en) unterbrochen wird.

3. Verfahren nach Anspruch 2, wobei der B1-Tank hydraulisch kontinuierlich mit einem SU1-Tank verbunden ist und wobei der B2-Tank hydraulisch kontinuierlich mit einem SU2-Tank verbunden ist, wobei bei diesem Verfahren im Notfall die hydraulische Verbindung zwischen dem P-Tank und entweder dem B1-Tank oder dem B2-Tank durch Schließen der jeweiligen verschließbaren Öffnung(en) unterbrochen wird, um entweder sowohl den B1-Tank als auch den SU1-Tank oder sowohl den B2-Tank als auch den SU2-Tank abzuschalten, und das Abwasser wird dann in den nicht abgeschalteten Tanks gesammelt und angehoben, und das behandelte Abwasser kann über die Überlaufeinheit des jeweiligen nicht abgeschalteten SU-Tanks abfließen.

4. Verfahren nach Anspruch 1, **dadurch gekennzeichnet, dass** der P-Tank in der Mitte des B-Tanks positioniert ist und den B-Tank in den B1-Tank und den B2-Tank unterteilt, wobei jeder der B1-Tanks und der B2-Tanks über mindestens eine verschließbare Öffnung hydraulisch mit dem P-Tank verbunden werden kann, wobei der B1-Tank zwischen dem P-Tank und mindestens einem SU-Tank positioniert ist und wobei der B2-Tank zwischen dem P-Tank und mindestens einem SU-Tank positioniert ist, wobei bei diesem Verfahren im Notfall die hydraulische Verbindung zwischen dem P-Tank und entweder dem B1-Tank oder dem B2-Tank durch Schließen der jeweiligen verschließbaren Öffnung(en) unterbrochen wird.

5. Verfahren nach Anspruch 4, **dadurch gekennzeichnet, dass**:
der B1-Tank hydraulisch kontinuierlich mit einem SU1-Tank verbunden ist und der B2-Tank hydraulisch kontinuierlich mit einem SU2-Tank verbunden ist, wobei bei diesem Verfahren im Notfall die hydraulische Verbindung zwischen dem P-Tank und entweder dem B1-Tank oder dem B2-Tank durch Schließen der jeweiligen verschließbaren Öffnung(en) unterbrochen wird, um entweder sowohl den B1-Tank als auch den SU1-Tank oder sowohl den B2-Tank als auch den SU2-Tank abzuschalten, und das Abwasser wird dann in den nicht abgeschalteten Tanks gesammelt und angehoben, und das behandelte Abwasser kann über die Überlaufeinheit des jeweiligen nicht abgeschalteten SU-Tanks abfließen;
oder **dadurch gekennzeichnet, dass**:
der B1-Tank kontinuierlich hydraulisch mit einem SU1-Tank und einem SU2-Tank (im Folgenden als "Tanks B1-SU1-SU2" bezeichnet) verbunden ist, und der B2-Tank hydraulisch kontinuierlich mit einem SU1-Tank und einem SU2-Tank verbunden ist (im Folgenden als "Tanks B2-SU1-SU2" bezeichnet), wobei bei diesem Verfahren im Notfall die hydraulische Verbindung zwischen dem P-Tank und entweder dem B1-Tank oder dem B2-Tank durch Schließen der jeweiligen verschließbaren Öffnung(en) unterbrochen wird, was zu einer Abschaltung entweder der Tanks B1-SU1-SU2 oder der Tanks B2-SU1-SU2, und das Abwasser wird dann in den nicht abgeschalteten Tanks gesammelt und angehoben, und der Pegel des behandelten Abwassers kann bis zur Oberkante der Überlaufeinheit der jeweiligen nicht abgeschalteten SU-Tanks ansteigen.

6. Verfahren nach Anspruch 1, **dadurch gekennzeichnet, dass** sich der B-Tank zwischen dem P-Tank und den SU-Tanks befindet, der B-Tank durch eine Wand in den B1-Tank und den B2-Tank unterteilt ist, wobei sowohl der B1-Tank als auch der B2-Tank über mindestens eine verschließbare Öffnung hydraulisch mit dem P-Tank verbunden werden können, wobei in der S-Phase der eingedickte Belebtschlamm über eine oder mehrere Leitungen aus dem mindestens einen SU1-Tank bzw. dem mindestens einen SU2-Tank in den P-Tank überführt wird, wobei bei dem Verfahren im Notfall die hydraulische Verbindung zwischen dem P-Tank und entweder dem B1-Tank oder dem B2-Tank durch Schließen der jeweiligen verschließbaren Öffnung(en) unterbrochen wird, wobei während der Vollbetriebsphase in der S-Phase der eingedickte Belebtschlamm weitgehend in den B1-Tank bzw. den B2-Tank geleitet wird und der P-Tank in erster Linie die Aufgabe hat, das ankommende Abwasser auf B1 und B2 aufzuteilen.

7. Verfahren nach einem der Ansprüche 1 bis 6, **dadurch gekennzeichnet, dass** der P-Tank belüftet wird und optional auch der B1-Tank und der B2-Tank.

8. Verfahren nach einem der Ansprüche 1 bis 7, **dadurch gekennzeichnet, dass** der P-Tank Belüftungs- und/oder Rühreinheiten umfasst, die für Reparaturen abnehmbar sind.

9. Verfahren nach einem der Ansprüche 1 bis 8, **dadurch gekennzeichnet, dass** die im Notfall abgeschalteten Tanks für kurze Zeit, z. B. zur Reparatur, entleert werden, während gleichzeitig die biologische Reinigung des Abwassers mit den nicht abgeschalteten Tanks betrieben wird.

10. Verfahren nach Anspruch 7, **dadurch gekennzeichnet, dass** der P-Tank Belüftungseinheiten oder Belüftungseinheiten und Rühreinheiten umfasst, wobei:
bei Vollbetrieb aller Tanks die Belüftung im P-Tank aktiviert wird und auf eine biologische Phosphorelimination verzichtet wird;
oder wobei:
bei Vollbetrieb aller Tanks die Belüftung im P-Tank abgeschaltet wird und die biologische Phosphorelimination in Betrieb genommen wird.

11. Verfahren nach einem der Ansprüche 1 bis 10, **dadurch gekennzeichnet, dass** im Notfall ein Mittel zur Verbesserung der Schlammflockung, vorzugsweise ein Flockungsmittel, einem oder mehreren der nicht abgeschalteten Becken zugesetzt wird.

12. Verfahren nach einem der Ansprüche 1 bis 11, **dadurch gekennzeichnet, dass** im Notfall der Überschussschlamm aus dem/den nicht abgeschalteten SU-Tank(s) entfernt wird.

13. Kläranlage zur biologischen Reinigung von Abwasser mit Hilfe von Belebtschlamm (4), wobei die Kläranlage so konfiguriert ist, dass sie im Notbetrieb betrieben werden kann, wobei im Notbetrieb ein oder mehrere Becken der Kläranlage abgeschaltet oder geleert werden, um beispielsweise Reparatur- oder Wartungsarbeiten zu ermöglichen, wobei die Kläranlage umfasst:
• einen belüftbaren Belebtschlammbehälter (im Folgenden als B-Behälter bezeichnet),
• mindestens zwei Sedimentations- und Rezirkulationsbehälter (im Folgenden als SU-Behälter bezeichnet), wobei die mindestens zwei SU-Behälter mindestens einen ersten Sedimentations- und Rezirkulationsbehälter (im Folgenden als SU1-Behälter bezeichnet) und mindestens einen zweiten Sedimentations- und Rezirkulationsbehälter (im Folgenden als SU2-Tank bezeichnet), wobei der mindestens eine SU1-Tank und der mindestens eine SU2-Tank hydraulisch kontinuierlich mit dem B-Tank verbunden sind, wobei der mindestens eine SU1-Tank und der mindestens eine SU2-Tank so konfiguriert sind, dass sie im Laufe eines Tages eine Anzahl von Betriebszyklen durchführen, einschließlich einer Schlammrückführungsphase, einer Rezirkulationsphase, einer Vorklärungsphase und einer Abzugsphase (im Folgenden als S-Phase, U-Phase, V-Phase bzw. A-Phase bezeichnet) auszuführen, wobei jeder der SU-Tanks eine Ablaufvorrichtung (10) umfasst, die so konfiguriert ist, dass sie während der A-Phase geöffnet wird, und
• ein Tank zur biologischen Phosphorelimination (im Folgenden als P-Tank bezeichnet), wobei der P-Tank über eine oder mehrere Öffnungen (2) hydraulisch mit dem B-Tank verbunden ist und wobei das Volumen des P-Tanks permanent oder intermittierend gemischt wird,
wobei die Kläranlage so konfiguriert ist, dass sie das Abwasser zunächst in den P-Tank und anschließend in den B-Tank einleitet und dann aus dem B-Tank abwechselnd in den mindestens einen SU1-Tank und in den mindestens einen SU2-Tank,
wobei die Kläranlage so konfiguriert ist, dass sie nacheinander in der S-Phase mindestens einen Teil des eingedickten Belebtschlamms aus dem mindestens einen SU1-Tank bzw. dem mindestens einen SU2-Tank in den P-Tank einleitet, in der U-Phase den eingedickten Belebtschlamm erneut mit dem Wasser vermischt, in der V-Phase den Belebtschlamm sedimentieren lässt und in der A-Phase durch Öffnen einer Ablaufvorrichtung des jeweiligen SU-Tanks behandeltes Wasser abzieht, wobei in dem mindestens einen SU1-Tank und dem mindestens einen SU2-Tank die Betriebszyklen zueinander phasenverschoben sind, die A-Phasen im mindestens einen SU1-Tank und im mindestens einen SU2-Tank aneinandergrenzen, ein Durchfluss lediglich in den A-Phasen durch den mindestens einen SU1-Tank bzw. den mindestens einen SU2-Tank erfolgt, ein annähernd konstanter Wasserstand bereitgestellt wird und sich daher ein der Abwasserbehandlungsanlage-Zufuhr entsprechender Abwasserbehandlungsanlage-Ablauf entwickelt (Prinzip des "kontinuierlichen Durchflusses"), **dadurch gekennzeichnet, dass**
der B-Tank in zwei Tanks B1 und B2 (im Folgenden als B1-Tank und B2-Tank bezeichnet) unterteilt ist, die über den P-Tank hydraulisch miteinander verbunden werden können, wobei der B1-Tank kontinuierlich hydraulisch mit mindestens einem SU-Tank verbunden ist und der B2-Tank kontinuierlich hydraulisch mit mindestens einem SU-Tank verbunden ist, um eine Einstrang-Kläranlage aufzubauen,
wobei der P-Tank Verschlussmittel umfasst, um die hydraulische Verbindung zwischen dem P-Tank und dem B1-Tank und/oder dem B2-Tank zu unterbrechen;
wobei, wenn die Kläranlage im Notbetrieb arbeitet, die Verschlussmittel so konfiguriert sind, dass sie die hydraulische Verbindung zwischen dem P-Tank und entweder dem B1-Tank oder dem B2-Tank unterbrechen, und
wobei jeder der SU-Tanks eine Überlaufeinheit (3) umfasst, die so konfiguriert ist, dass sie überschüssiges behandeltes Abwasser ohne den Schlamm in der Kläranlage im genannten Notbetrieb ablässt, wobei in der S-Phase, der U-Phase und der ersten Hälfte der V-Phase das Abwasser in den nicht abgeschnittenen Tanks ansteigt und eine maximale Höhe des Wasserstands (8) in den Tanks nicht überschritten wird, und
wobei in dem Notbetrieb die Ablaufvorrichtung (10) des jeweiligen SU-Tanks so konfiguriert ist, dass sie während der A-Phase geöffnet wird, wodurch der Wasserstand ein niedrigeres Niveau annimmt.

14. Kläranlage nach Anspruch 13, **dadurch gekennzeichnet, dass**:
der P-Tank in der Mitte des B-Tanks und neben den mindestens zwei SU-Tanks angeordnet ist und der P-Tank den B-Tank in den B1-Tank und den B2-Tank unterteilt, wobei der B1-Tank und der B2-Tank jeweils über mindestens eine verschließbare Öffnung (2) hydraulisch mit dem P-Tank verbunden werden können;
oder **dadurch gekennzeichnet, dass**:
der B-Tank zwischen dem P-Tank und den SU-Tanks angeordnet ist, der B-Tank durch eine Wand (11) in einen B1-Tank und einen B2-Tank unterteilt ist, wobei jeder der B1-Tanks und der B2-Tanks über mindestens eine verschließbare Öffnung hydraulisch mit dem P-Tank verbunden werden kann, wobei jeder SU-Tank mit einem oder mehreren Rohren (12) verbunden ist, die dazu ausgelegt sind, den eingedickten Belebtschlamm (4) aus dem jeweiligen SU-Tank in den P-Tank zu befördern.

15. Kläranlage nach Anspruch 14, **dadurch gekennzeichnet, dass** der B1-Tank kontinuierlich hydraulisch mit einem SU1-Tank verbunden ist und wobei der B2-Tank kontinuierlich hydraulisch mit einem SU2-Tank verbunden ist.

16. Kläranlage nach Anspruch 13, **dadurch gekennzeichnet, dass** der P-Tank in der Mitte des B-Tanks angeordnet ist und den B-Tank in den B1-Tank und den B2-Tank unterteilt, wobei sowohl der B1-Tank als auch der B2-Tank über mindestens eine verschließbare Öffnung (2) hydraulisch mit dem P-Tank verbunden werden kann, wobei der B1-Tank zwischen dem P-Tank und mindestens einem SU-Tank angeordnet ist und wobei der B2-Tank zwischen dem P-Tank und mindestens einem SU-Tank angeordnet ist.

17. Kläranlage nach Anspruch 16, **dadurch gekennzeichnet, dass** der B1-Tank kontinuierlich hydraulisch mit einem SU1-Tank verbunden ist und der B2-Tank kontinuierlich hydraulisch mit einem SU2-Tank verbunden ist;
oder dadurch, dass
der B1-Tank hydraulisch kontinuierlich mit einem SU1-Tank und einem SU2-Tank (im Folgenden als "Tanks B1-SU1-SU2" bezeichnet) verbunden ist und der B2-Tank hydraulisch kontinuierlich mit einem SU1-Tank und einem SU2-Tank (im Folgenden als "Tanks B2-SU1-SU2" bezeichnet) verbunden ist.

18. Kläranlage nach einem der Ansprüche 13 bis 17, **dadurch gekennzeichnet, dass** der P-Tank in Form eines Zirkulationstanks ausgebildet ist.

## Revendications

1. Procédé pour effectuer une purification biologique des eaux usées à l'aide de boues activées dans une station d'épuration, lequel procédé permet un fonctionnement en mode d'urgence de la station d'épuration, dans lequel, lors dudit fonctionnement en mode d'urgence, un ou plusieurs bassins de la station d'épuration sont arrêtés ou vidés pour permettre, par exemple, des travaux de réparation ou de maintenance, la station d'épuration comprenant :
• un réservoir à boues activées pouvant être ventilé (ci-après dénommé « réservoir B »),
• au moins deux réservoirs de sédimentation et de recirculation (ci-après dénommés « réservoirs SU »), dans lesquels les au moins deux réservoirs SU comprennent au moins un premier réservoir de sédimentation et de recirculation (ci-après dénommé « réservoir SU1 ») et au moins un deuxième réservoir de sédimentation et de recirculation (ci-après dénommé réservoir SU2), dans lequel le au moins un réservoir SU1 et le au moins un réservoir SU2 sont reliés hydrauliquement en continu au réservoir B, dans lequel, dans le au moins un réservoir SU1 et dans le au moins un réservoir SU2, un certain nombre de cycles de fonctionnement sont effectués au cours d'une journée, comprenant une phase de retour des boues, une phase de recirculation, une phase de pré-sédimentation et une phase de soutirage (ci-après dénommées respectivement phase S, phase U, phase V et phase A), et
• un réservoir pour l'élimination biologique du phosphore (ci-après dénommé « réservoir P »), dans lequel le réservoir P est relié hydrauliquement au réservoir B par une ou plusieurs ouvertures, et dans lequel le volume du réservoir P est mélangé en permanence ou par intermittence,
dans lequel, dans ledit procédé, les eaux usées sont d'abord introduites dans le réservoir P, puis dans le réservoir B, et ensuite, à partir du réservoir B, alternativement dans au moins un réservoir SU1 et dans au moins un réservoir SU2,
dans lequel, consécutivement, dans la phase S, au moins une partie des boues activées épaissies est introduite à partir d'au moins un réservoir SU1 et d'au moins un réservoir SU2, respectivement, dans le réservoir P, dans la phase U, les boues activées épaissies sont à nouveau mélangées à l'eau, dans la phase V, les boues activées sont sédimentées, et dans la phase A, l'eau traitée est évacuée en ouvrant un dispositif d'effluent du réservoir SU respectif, dans lequel, dans le au moins un réservoir SU1 et le au moins un réservoir SU2, lesdits cycles de fonctionnement sont décalés en phase les uns par rapport aux autres, les phases A dans le réservoir SU1 et le réservoir SU2 sont contiguës, un flux traverse le réservoir SU1 et le réservoir SU2 respectivement uniquement pendant les phases A, un niveau d'eau approximativement constant est fourni et, par conséquent, un débit correspondant à l'alimentation du système de traitement des eaux usées se développe (principe du « flux continu »),
**caractérisé en ce que**
le réservoir B est divisé en deux réservoirs B1 et B2 (ci-après dénommés réservoir B1 et réservoir B2) qui peuvent être reliés hydrauliquement via le réservoir P, le réservoir B1 étant relié hydrauliquement en continu à au moins un réservoir SU et le réservoir B2 étant relié hydrauliquement en continu à au moins un réservoir SU, afin de constituer une station d'épuration à une seule ligne, le réservoir P comprenant des moyens de fermeture pour couper la connexion hydraulique entre le réservoir P et le réservoir B1 et/ou le réservoir B2, et chacun des réservoirs SU comprenant une unité de trop-plein pour évacuer l'excès d'eaux usées traitées dans la station d'épuration,
dans lequel, en fonctionnement d'urgence, la connexion hydraulique entre le réservoir P et le réservoir B1 ou le réservoir B2 est coupée, dans lequel, dans la phase S, la phase U et la première moitié de la phase V, les eaux usées sont alors accumulées et élevées dans les réservoirs qui ne sont pas coupés, les boues se déposent dans le ou les réservoirs SU respectifs, et les eaux usées traitées en excès sans les boues peuvent s'écouler via l'unité de trop-plein du ou des réservoirs SU respectifs et une hauteur maximale du niveau d'eau dans les réservoirs n'est pas dépassée, et dans lequel, dans la phase A, lorsque l'eau traitée est évacuée en ouvrant le dispositif d'évacuation du ou des réservoirs SU respectifs, le niveau d'eau atteint un niveau inférieur.

2. Procédé selon la revendication 1, **caractérisé en ce que** :
le réservoir P est positionné au milieu du réservoir B et adjacent aux au moins deux réservoirs SU, et le réservoir P divise le réservoir B en un réservoir B1 et un réservoir B2, chacun des réservoirs B1 et B2 pouvant être relié hydrauliquement au réservoir P via au moins une ouverture pouvant être fermée, dans lequel, dans ledit procédé, en cas d'urgence, la connexion hydraulique entre le réservoir P et le réservoir B1 ou le réservoir B2 est coupée en fermant la ou les ouvertures pouvant être fermées respectives ;
ou **caractérisé en ce que** :
le réservoir B est situé entre le réservoir P et les réservoirs SU, le réservoir B est divisé en réservoir B1 et réservoir B2 par une paroi, chacun des réservoirs B1 et B2 pouvant être relié hydrauliquement au réservoir P via au moins une ouverture pouvant être fermée, dans lequel, dans la phase S, les boues activées épaissies sont transférées via un ou plusieurs tuyaux depuis au moins un réservoir SU1 et au moins un réservoir SU2, respectivement, vers le réservoir P, dans lequel, dans ledit procédé, en cas d'urgence, la connexion hydraulique entre le réservoir P et soit le réservoir B1, soit le réservoir B2 est coupée en fermant la ou les ouvertures pouvant être fermées respectives.

3. Procédé selon la revendication 2, dans lequel le réservoir B1 est relié hydrauliquement en continu à un réservoir SU1 et dans lequel le réservoir B2 est relié hydrauliquement en continu à un réservoir SU2, dans lequel, dans ledit procédé, en cas d'urgence, la connexion hydraulique entre le réservoir P et soit le réservoir B1, soit le réservoir B2 est coupée en fermant la ou les ouvertures pouvant être fermées respectives, afin d'arrêter soit le réservoir B1 et le réservoir SU1, soit le réservoir B2 et le réservoir SU2, et les eaux usées sont alors accumulées et remontées dans les réservoirs qui ne sont pas arrêtés, et les eaux usées traitées peuvent s'écouler via l'unité de trop-plein du réservoir SU respectif qui n'est pas arrêté.

4. Procédé selon la revendication 1, **caractérisé en ce que** le réservoir P est positionné au milieu du réservoir B et divise le réservoir B en réservoir B1 et réservoir B2, chacun des réservoirs B1 et B2 pouvant être relié hydrauliquement au réservoir P via au moins une ouverture pouvant être fermée, le réservoir B1 étant positionné entre le réservoir P et au moins un réservoir SU et le réservoir B2 étant positionné entre le réservoir P et au moins un réservoir SU, dans lequel, dans ledit procédé, en cas d'urgence, la connexion hydraulique entre le réservoir P et le réservoir B1 ou le réservoir B2 est coupée en fermant la ou les ouvertures pouvant être fermées respectives.

5. Procédé selon la revendication 4, **caractérisé en ce que** :
le réservoir B1 est relié hydrauliquement en continu à un réservoir SU1, et le réservoir B2 est relié hydrauliquement en continu à un réservoir SU2, dans lequel, dans ledit procédé, en cas d'urgence, la connexion hydraulique entre le réservoir P et soit le réservoir B1, soit le réservoir B2 est coupée en fermant la ou les ouvertures pouvant être fermées respectives, afin d'arrêter soit le réservoir B1 et le réservoir SU1, soit le réservoir B2 et le réservoir SU2, et les eaux usées sont alors accumulées et remontées dans les réservoirs qui ne sont pas arrêtés, et les eaux usées traitées peuvent s'écouler via l'unité de trop-plein du réservoir SU respectif qui n'est pas arrêté ;
ou **caractérisé en ce que** :
le réservoir B1 est relié hydrauliquement en continu à un réservoir SU1 et à un réservoir SU2 (ci-après dénommés « réservoirs B₁-SU₁-SU₂ »), et le réservoir B2 est relié hydrauliquement en continu à un réservoir SU1 et à un réservoir SU2 (ci-après dénommés « réservoirs B2-SU1-SU2 »), dans lequel, dans ledit procédé, en cas d'urgence, la connexion hydraulique entre le réservoir P et le réservoir B1 ou le réservoir B2 est coupée en fermant la ou les ouvertures respectives pouvant être fermées, ce qui entraîne l'arrêt des réservoirs B1 -SU1-SU2 ou des réservoirs B2-SU1-SU2, et les eaux usées sont alors accumulées et remontées dans les réservoirs qui ne sont pas arrêtés, et le niveau des eaux usées traitées peut monter jusqu'au bord supérieur de l'unité de trop-plein des réservoirs SU respectifs qui ne sont pas arrêtés.

6. Procédé selon la revendication 1, **caractérisé en ce que** le réservoir B est situé entre le réservoir P et les réservoirs SU, le réservoir B est divisé en réservoir B1 et réservoir B2 par une paroi, chacun des réservoirs B1 et B2 pouvant être relié hydrauliquement au réservoir P via au moins une ouverture pouvant être fermée, dans lequel, dans la phase S, les boues activées épaissies sont transférées via un ou plusieurs tuyaux depuis au moins un réservoir SU1 et au moins un réservoir SU2, respectivement, vers le réservoir P, dans lequel, dans ledit procédé, en cas d'urgence, la connexion hydraulique entre le réservoir P et soit le réservoir B1, soit le réservoir B2 est coupée en fermant la ou les ouvertures pouvant être fermées respectives, dans lequel, pendant la phase de fonctionnement complet, dans la phase S, les boues activées épaissies sont en grande partie acheminées vers le réservoir B1 et le réservoir B2, respectivement, et le réservoir P a principalement pour tâche de répartir les eaux usées entrantes vers B1 et B2.

7. Procédé selon l'une quelconque des revendications 1 à 6, **caractérisé en ce que** le réservoir P est aéré et, en option, également le réservoir B1 et le réservoir B2.

8. Procédé selon l'une quelconque des revendications 1 à 7, **caractérisé en ce que** le réservoir P comprend des unités d'aération et/ou d'agitation qui sont amovibles pour permettre des réparations.

9. Procédé selon l'une quelconque des revendications 1 à 8, **caractérisé en ce que** les réservoirs qui sont coupés en cas d'urgence sont vidés pendant une courte période, par exemple pour réparation, tandis que la purification biologique des eaux usées est assurée par les réservoirs qui ne sont pas arrêtés.

10. Procédé selon la revendication 7, **caractérisé en ce que** le réservoir P comprend des unités d'aération ou des unités d'aération et des unités d'agitation, dans lequel :
lorsque tous les réservoirs fonctionnent à plein régime, l'aération dans le réservoir P est activée et l'élimination biologique du phosphore est supprimée ;
ou dans lequel :
lorsque tous les réservoirs fonctionnent à plein régime, l'aération dans le réservoir P est désactivée et l'élimination biologique du phosphore est mise en œuvre.

11. Procédé selon l'une quelconque des revendications 1 à 10, **caractérisé en ce que**, en cas d'urgence, un agent favorisant la sédimentation des boues, de préférence un floculant, est ajouté à un ou plusieurs des réservoirs qui ne sont pas coupés.

12. Procédé selon l'une quelconque des revendications 1 à 11, **caractérisé en ce que**, en cas d'urgence, les boues en excès sont éliminées du ou des réservoirs SU qui ne sont pas coupés.

13. Station d'épuration pour effectuer une purification biologique des eaux usées à l'aide de boues activées (4), dans laquelle la station d'épuration est configurée pour permettre un fonctionnement en mode d'urgence, dans lequel, dans ledit mode d'urgence, un ou plusieurs réservoirs de la station d'épuration sont arrêtés ou vidés pour permettre, par exemple, des travaux de réparation ou de maintenance, dans laquelle la station d'épuration comprend :
• un réservoir à boues activées pouvant être ventilé (ci-après dénommé « réservoir B »),
• au moins deux réservoirs de sédimentation et de recirculation (ci-après dénommés « réservoirs SU »), dans laquelle les au moins deux réservoirs SU comprennent au moins un premier réservoir de sédimentation et de recirculation (ci-après dénommé « réservoir SU1 ») et au moins un deuxième réservoir de sédimentation et de recirculation (ci-après dénommé réservoir SU2), dans lequel le au moins un réservoir SU1 et le au moins un réservoir SU2 sont reliés hydrauliquement en continu au réservoir B, dans lequel le au moins un réservoir SU1 et le au moins un réservoir SU2 sont configurés pour effectuer un certain nombre de cycles de fonctionnement au cours d'une journée, comprenant une phase de retour des boues, une phase de recirculation, une phase de pré-sédimentation et une phase de soutirage (ci-après dénommées respectivement phases S, U, V et A), dans lequel chacun des réservoirs SU comprend un dispositif d'effluent (10) configuré pour être ouvert pendant la phase A, et
• un réservoir pour l'élimination biologique du phosphore (ci-après dénommé « réservoir P »), dans lequel le réservoir P est relié hydrauliquement au réservoir B par une ou plusieurs ouvertures (2), et dans lequel le volume du réservoir P est mélangé en permanence ou par intermittence,
dans lequel la station d'épuration est configurée pour introduire d'abord les eaux usées dans le réservoir P, puis dans le réservoir B, et ensuite, à partir du réservoir B, en alternance, dans au moins un réservoir SU1 et dans au moins un réservoir SU2,
dans laquelle la station d'épuration est configurée pour, consécutivement, dans la phase S, introduire au moins une partie des boues activées épaissies provenant respectivement du au moins un réservoir SU1 et du au moins un réservoir SU2 dans le réservoir P, dans la phase U, mélanger à nouveau les boues activées épaissies avec l'eau, dans la phase V, faire sédimenter les boues activées, et, dans la phase A, prélever l'eau traitée en ouvrant un dispositif d'effluent du réservoir SU respectif, dans lequel, dans le au moins un réservoir SU1 et le au moins un réservoir SU2, lesdits cycles de fonctionnement sont décalés en phase les uns par rapport aux autres, les phases A dans le réservoir SU1 et le réservoir SU2 sont contiguës, un flux traverse le réservoir SU1 et le réservoir SU2 respectivement uniquement pendant les phases A, un niveau d'eau approximativement constant est fourni et, par conséquent, un débit correspondant à l'alimentation du système de traitement des eaux usées se développe (principe du « flux continu »),
**caractérisé en ce que**
le réservoir B est divisé en deux réservoirs B1 et B2 (ci-après dénommés réservoir B1 et réservoir B2) qui peuvent être reliés hydrauliquement via le réservoir P, le réservoir B1 étant relié hydrauliquement en continu à au moins un réservoir SU et le réservoir B2 étant relié hydrauliquement en continu à au moins un réservoir SU, afin de constituer une station d'épuration à une seule ligne,
dans lequel le réservoir P comprend des moyens de fermeture pour couper la connexion hydraulique entre le réservoir P et le réservoir B1 et/ou le réservoir B2 ;
dans lequel, lorsque la station d'épuration fonctionne en mode d'urgence, les moyens de fermeture sont configurés pour couper la connexion hydraulique entre le réservoir P et soit le réservoir B1, soit le réservoir B2, et
dans lequel chacun des réservoirs SU comprend une unité de trop-plein (3) qui est configurée pour évacuer l'excès d'eaux usées traitées sans les boues dans la station d'épuration dans ledit fonctionnement d'urgence, dans lequel, dans la phase S, la phase U et la première moitié de la phase V, les eaux usées montent dans les réservoirs qui ne sont pas coupés, et une hauteur maximale du niveau d'eau (8) dans les réservoirs n'est pas dépassée, et
dans lequel, dans ledit fonctionnement d'urgence, le dispositif d'effluent (10) du réservoir SU respectif est configuré pour être ouvert pendant la phase A, de sorte que le niveau d'eau atteint un niveau inférieur.

14. Station d'épuration selon la revendication 13, **caractérisée en ce que** :
le réservoir P est positionné au milieu du réservoir B et adjacent aux au moins deux réservoirs SU, et le réservoir P divise le réservoir B en un réservoir B1 et un réservoir B2, chacun des réservoirs B1 et B2 pouvant être relié hydrauliquement au réservoir P via au moins une ouverture refermable (2) ;
ou **caractérisée en ce que** :
le réservoir B est situé entre le réservoir P et les réservoirs SU, le réservoir B est divisé en réservoir B1 et réservoir B2 par une paroi (11), chacun des réservoirs B1 et B2 pouvant être relié hydrauliquement au réservoir P via au moins une ouverture pouvant être fermée, chaque réservoir SU étant relié à un ou plusieurs tuyaux (12) qui sont adaptés pour transférer les boues activées épaissies (4) du réservoir SU respectif vers le réservoir P.

15. Station d'épuration selon la revendication 14, **caractérisée en ce que** le réservoir B1 est relié hydrauliquement en continu à un réservoir SU1 et **en ce que** le réservoir B2 est relié hydrauliquement en continu à un réservoir SU2.

16. Station d'épuration selon la revendication 13, **caractérisée en ce que** le réservoir P est positionné au milieu du réservoir B et divise le réservoir B en un réservoir B1 et un réservoir B2, chacun des réservoirs B1 et B2 pouvant être relié hydrauliquement au réservoir P par au moins une ouverture pouvant être fermée (2), le réservoir B1 étant positionné entre le réservoir P et au moins un réservoir SU et le réservoir B2 étant positionné entre le réservoir P et au moins un réservoir SU.

17. Station d'épuration selon la revendication 16, **caractérisée en ce que** le réservoir B1 est relié hydrauliquement en continu à un réservoir SU1 et le réservoir B2 est relié hydrauliquement en continu à un réservoir SU2 ;
ou **en ce que**
le réservoir B1 est relié hydrauliquement en continu à un réservoir SU1 et à un réservoir SU2 (ci-après dénommés « réservoirs B1-SU1-SU2 »), et le réservoir B2 est relié hydrauliquement en continu à un réservoir SU1 et à un réservoir SU2 (ci-après dénommés « réservoirs B2-SU1-SU2 »).

18. Station d'épuration selon l'une quelconque des revendications 13 à 17, **caractérisée en ce que** le réservoir P est construit sous la forme d'un réservoir de circulation.
